# EUROPEAN PATENT APPLICATION

(11) **EP 4 817 943 A1**
(43) Date of publication of application: **07.10.2026**
(21) Application number: 26167976.5
(22) Date of filing: 26.03.2026
(51) Int. Cl.: B60L 53/22, B60L 53/30, H02J 3/42, H02J 7/02, H02M 1/36

(54) **CHARGING SYSTEM, CHARGING METHOD, ELECTRIC DRIVE SYSTEM AND VEHICLE**

(30) Priority: 03.04.2025 CN 202510421442
(71) Applicant: Valeo Electrification, 95892 Cergy Pontoise (FR)
(72) Inventor: WANG, Peifei, 91056 ERLANGEN (DE); WU, Wencai, 91056 ERLANGEN (DE)
(74) Representative: Valeo Powertrain Systems

(57) **Abstract**

Embodiments of the present disclosure provide a charging system and a charging method for charging an energy storage module from an external power source, an electric drive system and a vehicle. The charging system includes: a charging interface, including a voltage input terminal, a charging control switch and a first capacitor, wherein the external power source connects to the charging interface by means of the voltage input terminal, and the charging control switch is connected between the voltage input terminal and the first capacitor to control charging of the first capacitor by the external power source; a voltage measuring module, used for measuring a voltage of the external power source and a voltage of the first capacitor; and a bidirectional charging module and a charging control module, used for causing the charging system, on the basis of a voltage difference between the voltage of the external power source and the voltage of the first capacitor, to precharge the first capacitor from the energy storage module in a precharging mode, and to charge the energy storage module from the external power source via the first capacitor in a charging mode. The charging system of the present disclosure is capable of achieving a soft start safely and at a low cost.

## Description

### Technical Field

The present disclosure relates to the fields of circuits, automobiles, etc., and more specifically relates to a charging system and a charging method for charging an energy storage module from an external power source, an electric drive system and a vehicle.

### Background Art

To improve the performance of electrical and electronic devices, and improve the reliability of the electrical and electronic devices, a common means at present is to design a soft start circuit for the electrical and electronic devices.

Specifically, when electrical and electronic devices start up, if directly connected to a power source, a larger starting current may be generated, affecting and even damaging circuits and components in the devices. A soft start circuit can enable a device to start up smoothly by gradually increasing an input voltage or current, which prevents a current surge from damaging the device. Moreover, a large current when a device starts up may cause grid voltage fluctuations, affecting the normal operation of other devices. A soft start circuit can control starting current, so as to reduce disturbance to the grid, ensuring stable operation of the grid, thereby protecting other devices from the effects of voltage fluctuations. For an electrical device with a mechanical transmission (such as an electric motor, a fan, a compressor, etc.), a soft start circuit can reduce mechanical impacts and vibrations during start up, protecting mechanical components of the device, extending the service life thereof. In electrical and electronic devices, a soft start circuit can prevent a surge current during start up from damaging a sensitive element such as a capacitor or semiconductor. By controlling rates of current and voltage change during start up, the soft start circuit is able to effectively protect these elements. By reducing current surge and mechanical stress during start up, the soft start circuit is able to significantly extend the service life of the device, reducing a fault rate of the device. In addition, through a process of smoothly raising voltage and current, the soft start circuit reduces electromagnetic interference during device start up, preventing other surrounding devices from being affected.

At present, how to further improve the protective effect of the soft start circuit for electrical and electronic devices, and simplify a circuit structure as much as possible, reducing circuit costs, are important research topics for a person skilled in the art. Especially in fields with high safety and reliability requirements, such as the field of automobiles, a well-designed and low-cost soft start circuit is particularly important.

### Summary of the Invention

To realize a soft start of a charging system safely and at a low cost, the present disclosure proposes a charging system for charging an energy storage module from an external power source, the charging system comprising: a charging interface, comprising a voltage input terminal, a charging control switch and a first capacitor, wherein the external power source connects to the charging interface by means of the voltage input terminal, and the charging control switch is connected between the voltage input terminal and the first capacitor to control charging of the first capacitor by the external power source; a voltage measuring module, used for measuring a voltage of the external power source and a voltage of the first capacitor; a bidirectional charging module, used for precharging the first capacitor from the energy storage module in a precharging mode, and for charging the energy storage module from the external power source via the first capacitor in a charging mode; and a charging control module, used for controlling the charging control switch to open and controlling the bidirectional charging module to precharge the first capacitor from the energy storage module, in a scenario in which a voltage difference between the voltage of the external power source and the voltage of the first capacitor is greater than a first threshold; and used for controlling the charging control switch to close and controlling the bidirectional charging module to charge the energy storage module from the external power source, in a scenario in which said voltage difference is less than the first threshold.

According to embodiments of the present disclosure, the bidirectional charging module comprises: an AC-DC conversion circuit, a second capacitor, a DC voltage conversion circuit and a third capacitor, wherein the first capacitor is connected in parallel to an AC side of the AC-DC conversion circuit, and the second capacitor is connected in parallel to a DC side of the AC-DC conversion circuit; and a first voltage conversion side of the DC voltage conversion circuit is connected in parallel to the second capacitor, and a second voltage conversion side of the DC voltage conversion circuit is connected in parallel to the third capacitor, and the third capacitor is connected in parallel to the energy storage module.

According to embodiments of the present disclosure, in a scenario in which the first capacitor is precharged from the energy storage module, the AC-DC conversion circuit is used for inverting voltage of the first voltage conversion side of the DC voltage conversion circuit into first AC power, to precharge the first capacitor using the first AC power; and in a scenario in which the energy storage module is charged from the external power source, the AC-DC conversion circuit is used for rectifying voltage across two ends of the first capacitor into first DC power, for the first DC power to act as input for the first voltage conversion side of the DC voltage conversion circuit.

According to embodiments of the present disclosure, the AC-DC conversion circuit comprises at least one of a passive power factor correction circuit and an active power factor correction circuit; the DC voltage conversion circuit comprises at least one of a resonant bidirectional DC voltage conversion circuit and a dual active bridge DC voltage conversion circuit.

According to embodiments of the present disclosure, the DC voltage conversion circuit comprises a first AC-DC conversion module, a transformer module and a second AC-DC conversion module, wherein in a scenario in which the energy storage module is charged from the external power source, the first AC-DC conversion module is used for converting voltage of the first voltage conversion side of the DC voltage conversion circuit into second AC power, and the transformer module is used for converting the second AC power into third AC power, and the second AC-DC conversion module is used for converting the third AC power into voltage of the second voltage conversion side of the DC voltage conversion circuit; and in a scenario in which the first capacitor is precharged from the energy storage module, the second AC-DC conversion module is used for converting voltage of the second voltage conversion side of the DC voltage conversion circuit into fourth AC power, and the transformer module is used for converting the fourth AC power into fifth AC power, and the first AC-DC conversion module is used for converting the fifth AC power into voltage of the first voltage conversion side of the DC voltage conversion circuit.

According to embodiments of the present disclosure, the charging control switch is realized on the basis of a relay, wherein a contact of the relay is open in a scenario in which said voltage difference is greater than the first threshold, and the contact of the relay is closed in a scenario in which said voltage difference is less than the first threshold.

According to embodiments of the present disclosure, the bidirectional charging module is an onboard charger, and the energy storage module is an onboard power source.

Embodiments of the present disclosure further provide a method for charging an energy storage module from an external power source, the method comprising: in a scenario in which the external power source is connected to a charging interface of a charging system by means of a voltage input terminal inside the charging interface, measuring a voltage of the external power source and a voltage of a first capacitor in the charging interface, wherein a charging control switch for controlling the external power source to charge the first capacitor is connected between the voltage input terminal and the first capacitor; judging whether a voltage difference between the voltage of the external power source and the voltage of the first capacitor is greater than a first threshold; and controlling the charging control switch to open, so that a bidirectional charging module precharges the first capacitor from the energy storage module, in a scenario in which the voltage difference between the voltage of the external power source and the voltage of the first capacitor is greater than the first threshold; and controlling the charging control switch to close, so that the bidirectional charging module charges the energy storage module from the external power source, in a scenario in which said voltage difference is less than the first threshold.

Embodiments of the present disclosure further provide an electric drive system, comprising the charging system described above.

Embodiments of the present disclosure further provide a vehicle, comprising the charging system and/or electric drive system described above.

The charging system of the present disclosure is able to realize a soft start at a low cost, avoiding sudden changes in voltage and current at components in the charging system during charging affecting the components, affecting the performance and service life of the components, and thus improving the reliability of the charging system.

### Brief Description of the Drawings

In order to explain the technical solutions of embodiments of the present disclosure more clearly, drawings required for describing the embodiments are briefly described below. Obviously, the drawings in the description below are merely some exemplary embodiments of the present disclosure, and those skilled in the art could obtain other drawings based on these drawings without expending inventive effort.

In the drawings:
Fig. 1A is a schematic drawing of principles of a charging system;
Fig. 1B is a schematic drawing of principles of a charging system according to a first embodiment of the present disclosure;
Fig. 2 is a schematic drawing of principles of a charging system according to a second embodiment of the present disclosure;
Fig. 3 is a schematic drawing of principles of a charging system according to a third embodiment of the present disclosure;
Fig. 4 is a schematic drawing of a charging process according to embodiments of the present disclosure;
Fig. 5 is a schematic flowchart of a method for charging an energy storage module from an external power source according to embodiments of the present disclosure; and
Fig. 6 is a schematic drawing of the composition of a charging system according to embodiments of the present disclosure.

### Detailed Description of the Invention

In order to make the objectives, technical solutions and advantages of the present disclosure clearer, the exemplary embodiments according to the present disclosure are described in detail below with reference to the accompanying drawings. Obviously, the described embodiments are merely some, rather than all, of the embodiments of the present disclosure; it should be understood that the present disclosure is not limited to the exemplary embodiments described herein.

In addition, in the present Description and the accompanying drawings, substantially the same or similar steps and elements are denoted using the same or similar reference numerals, and repeated descriptions of these steps and elements are omitted.

Further, in the present Description and the accompanying drawings, elements are described in a singular or plural form according to the embodiments. However, the singular and plural forms are appropriately selected for use in the proposed case merely to facilitate explanation, and are not intended to limit the present disclosure. Therefore, the singular form may include the plural form, and the plural form may also include the singular form, unless otherwise specified in the context explicitly.

In addition, in the present Description and the accompanying drawings, the terms "first/second" merely distinguish between similar objects and do not represent a specific sorting of the objects. It will be understood that if permitted, "first/second" may be exchanged for a specific order or sequence, to enable embodiments of the present disclosure described herein to be implemented in a different order from that illustrated or described herein.

In addition, in the present Description and the accompanying drawings, unless otherwise explicitly stated, "connect" does not necessarily imply "direct connection" or "direct contact"; herein, "connect" may not only represent a fixing effect but also may represent a connection in an electrical sense.

As an example, the present disclosure relates to the fields of circuits, automobiles, etc., and embodiments of the present disclosure are further described below in conjunction with the drawings.

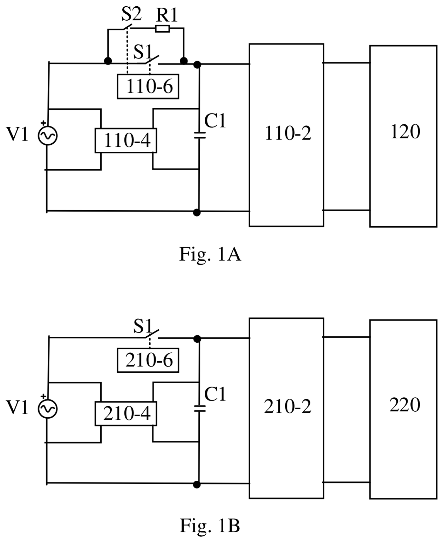

Fig. 1A is a schematic drawing of principles of a charging system.

The charging system shown in Fig. 1A is used for charging an energy storage module 120 from an external power source V1, the charging system comprising a charging interface and a charging unit. The charging interface comprises a voltage input terminal (a voltage input terminal at two sides of V1 shown in Fig. 1A), a first control switch S1, a second control switch S2, a current limiting resistor R1 and a first capacitor C1. The charging unit has functions such as measuring voltage, charging and charging control. For example, the charging unit comprises a charging module 110-2, a voltage measuring module 110-4 and a charging control module 110-6 shown in Fig. 1A.

When the charging system is used for onboard charging, the charging unit may be an onboard charger (OBC). The onboard charger acts as a bridge between an automobile and a public grid, and plays a crucial role. It can efficiently convert AC power provided by the grid into DC power needed by a high voltage battery of the automobile, thereby satisfying charging requirements for a traction battery. Moreover, the OBC can further invert DC power of the traction battery into AC power, such that energy can be fed back into the grid, achieving bidirectional conversion of energy. In addition, it is further equipped with multiple protection functions, such as overvoltage, undervoltage, overcurrent, undercurrent protection, etc., ensuring power supply can be quickly cut off when the charging system encounters an abnormality, ensuring safety. It should be noted that OBCs used in new energy vehicles may be divided into two types: unidirectional and bidirectional. A unidirectional OBC is mainly used for charging a traction battery, whereas a bidirectional OBC has more functions: it not only can charge a traction battery, but also can invert DC power of the traction battery into 220V AC power for domestic use, thus using energy in more ways.

The external power source V1 is connected to the charging interface by means of the voltage input terminal. The second control switch S2 is connected in series to the current limiting resistor R1, and is connected between the voltage input terminal and the first capacitor C1. In a precharging mode, the charging unit controls the external power source V1 to precharge the charging module 110-2 via the second control switch S2, the current limiting resistor R1 and the first capacitor C1. The first control switch S1 is connected between the voltage input terminal and the first capacitor C1. In a charging mode, the charging unit controls the external power source V1 to charge the energy storage module 120 via the first control switch S1, the first capacitor C1 and the charging module 110-2.

When it is necessary to charge the energy storage module 120 from the external power source V1, the voltage measuring module 110-4 may measure a voltage of the external power source V1 and a voltage of the first capacitor C1. In a scenario in which a voltage difference between the voltage of the external power source V1 and the voltage of the first capacitor C1 is greater than a first threshold, the charging module 110-2 is first precharged in the precharging mode. In the precharging mode, the charging control module 110-6 controls the first control switch S1 to open, the second control switch S2 to close, and the external power source V1 to precharge the charging module 110-2 via the second control switch S2, the current limiting resistor R1 and the first capacitor C1. The current limiting resistor R1 may prevent sudden changes in voltage and current at the charging module 110-2. In a scenario in which the voltage difference between the voltage of the external power source V1 and the voltage of the first capacitor C1 is less than the first threshold, the charging unit switches to the charging mode to charge the energy storage module 120. In the charging mode, the charging control module 110-6 controls the first control switch S1 to close, the second control switch S2 to open, and the external power source V1 to charge the energy storage module 120 via the first control switch S1, the first capacitor C1 and the charging module 110-2.

The charging system shown in Fig. 1A mainly achieves a soft start of the charging system by precharging the charging module 110-2 via the current limiting resistor R1 and the first capacitor C1 in the precharging mode.

Fig. 1B is a schematic drawing showing principles of a charging system according to a first embodiment of the present disclosure.

The charging system shown in Fig. 1B is used for charging an energy storage module 220 from an external power source V1, the charging system comprising a charging interface and a charging unit. The charging interface comprises a voltage input terminal (a voltage input terminal at two sides of V1 shown in Fig. 1B), a first control switch S1 and a first capacitor C1. The charging unit has functions such as measuring voltage, charging and charging control. For example, the charging unit comprises a bidirectional charging module 210-2, a voltage measuring module 210-4 and a charging control module 210-6 shown in Fig. 1B.

The first control switch S1 is connected between the voltage input terminal and the first capacitor C1. Unlike the charging unit in Fig. 1A, the charging unit in Fig. 1B not only can be used for a process of charging an energy storage module 220 from an external power source V1, but also can be used for a process of charging the external power source V1 from the energy storage module 220. When it is necessary to charge the energy storage module 220 from the external power source V1, the voltage measuring module 210-4 may measure a voltage of the external power source V1 and a voltage of the first capacitor C1. In a scenario in which a voltage difference between a voltage of the external power source V1 and a voltage of the first capacitor C1 is greater than a first threshold, the charging control module 210-6 controls the first control switch S1 to open, and the charging unit precharges the first capacitor C1 from the energy storage module 220 via the bidirectional charging module 210-2 in a precharging mode. Next, in a scenario in which the voltage difference between the voltage of the external power source V1 and the voltage of the first capacitor C1 is less than the first threshold, the charging unit switches to a charging mode to charge the energy storage module 220. In the charging mode, the charging control module 210-6 controls the first control switch S1 to close, and the external power source V1 to charge the energy storage module 220 via the first control switch S1, the first capacitor C1 and the bidirectional charging module 210-2.

Unlike the charging system shown in Fig. 1A, the charging system shown in Fig. 1B charges the first capacitor C1 by using a bidirectional charging characteristic of the bidirectional charging module 210-2 in the precharging mode, achieving a soft start of the charging system, with higher reliability.

Fig. 1B does not show specific constituent parts of the voltage measuring module and the charging control module, and no restrictions are imposed in this respect. Since the second control switch S2 and the current limiting resistor R1 are dispensed with in the charging system shown in Fig. 1B, the cost of the charging system is effectively reduced.

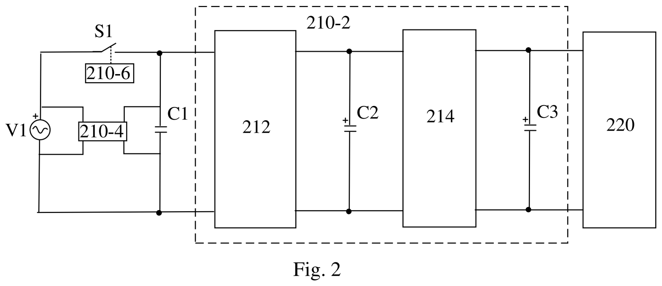

Fig. 2 is a schematic drawing of principles of a charging system according to a second embodiment of the present disclosure.

Like the charging system shown in Fig. 1B, the charging system shown in Fig. 2 is used for charging an energy storage module 220 from an external power source V1, the charging system comprising a charging interface and a charging unit. The charging interface comprises a voltage input terminal (a voltage input terminal at two sides of V1 shown in Fig. 2), a first control switch S1 and a first capacitor C1. The charging unit has functions such as measuring voltage, charging and charging control. For example, the charging unit comprises a bidirectional charging module 210-2, a voltage measuring module 210-4 and a charging control module 210-6 shown in Fig. 2.

The bidirectional charging module 210-2 may comprise an AC-DC conversion circuit 212, a second capacitor C2, a DC voltage conversion circuit 214 and a third capacitor C3, wherein the first capacitor C1 is connected in parallel to an AC side of the AC-DC conversion circuit 212, and the second capacitor C2 is connected in parallel to a DC side of the AC-DC conversion circuit 212; a first voltage conversion side of the DC voltage conversion circuit 214 is connected in parallel to the second capacitor C2, and a second voltage conversion side of the DC voltage conversion circuit 214 is connected in parallel to the third capacitor C3, and the third capacitor C3 is connected in parallel to the energy storage module 220. In a precharging mode, the AC-DC conversion circuit 212 is used for inverting voltage of the first voltage conversion side of the DC voltage conversion circuit 214 into first AC power, to precharge the first capacitor C1 using the first AC power. In a charging mode, the AC-DC conversion circuit 212 is used for rectifying voltage across two ends of the first capacitor C1 into first DC power, for the first DC power to act as input for the first voltage conversion side of the DC voltage conversion circuit 214. The first capacitor C1, the second capacitor C2 and the third capacitor C3 are used for filtering and voltage stabilization.

It should be understood that Fig. 2 does not show specific constituent parts of the voltage measuring module and the charging control module, and no restrictions are imposed in this respect. The charging system shown in Fig. 2 is also a charging system that achieves a soft start, by charging the first capacitor C1 using a bidirectional charging characteristic of the bidirectional charging module 210-2 in the precharging mode.

Compared to the charging system shown in Fig. 1A, the soft start of the charging system shown in Fig. 2 is more reliable and costs less.

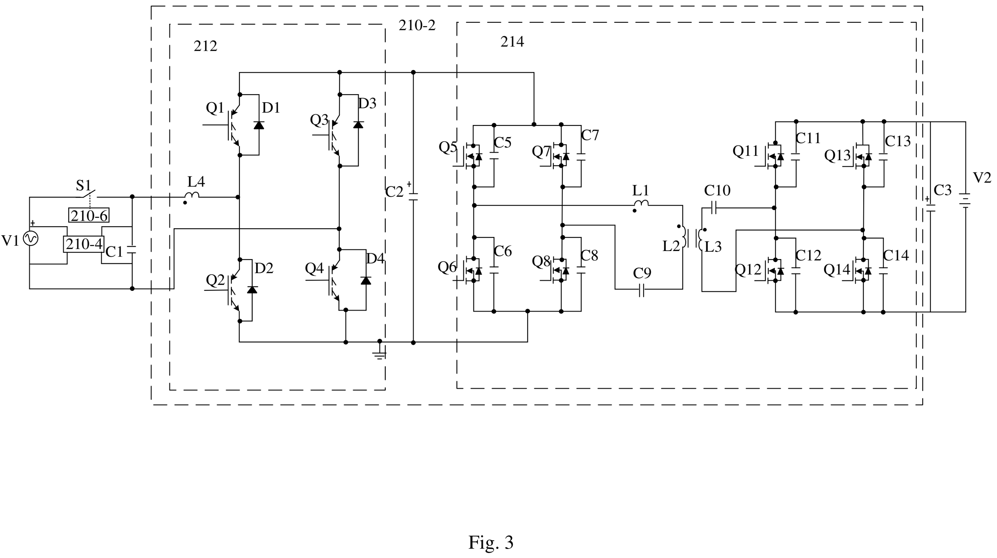

Fig. 3 is a schematic drawing of principles of a charging system according to a third embodiment of the present disclosure.

Like the charging system shown in Fig. 2, the charging system shown in Fig. 3 is used for charging a battery V2 from an external power source V1, the charging system comprising a charging interface and a charging unit. The charging interface comprises a voltage input terminal (a voltage input terminal at two sides of V1 shown in Fig. 3), a first control switch S1 and a first capacitor C1. The charging unit has functions such as measuring voltage, charging and charging control. For example, the charging unit comprises a bidirectional charging module 210-2, a voltage measuring module 210-4 and a charging control module 210-6 shown in Fig. 3.

The bidirectional charging module 210-2 may comprise an AC-DC conversion circuit 212, a second capacitor C2, a DC voltage conversion circuit 214 and a third capacitor C3, wherein the first capacitor C1 is connected in parallel to an AC side of the AC-DC conversion circuit 212, and the second capacitor C2 is connected in parallel to a DC side of the AC-DC conversion circuit 212; a first voltage conversion side of the DC voltage conversion circuit 214 is connected in parallel to the second capacitor C2, and a second voltage conversion side of the DC voltage conversion circuit 214 is connected in parallel to the third capacitor C3, and the third capacitor C3 is connected in parallel to the battery V2. In a precharging mode, the AC-DC conversion circuit 212 is used for inverting voltage of the first voltage conversion side of the DC voltage conversion circuit 214 into first AC power, to precharge the first capacitor C1 using the first AC power. In a charging mode, the AC-DC conversion circuit 212 is used for rectifying voltage across two ends of the first capacitor C1 into first DC power, for the first DC power to act as input for the first voltage conversion side of the DC voltage conversion circuit 214. The first capacitor C1, the second capacitor C2 and the third capacitor C3 are used for filtering and voltage stabilization.

As an example, the AC-DC conversion circuit 212 may be a power factor correction (PFC) circuit shown in Fig. 3, wherein the power factor correction circuit comprises a bridge circuit formed of controllable switches Q1, Q2, Q3, Q4 and diodes D1, D2, D3, D4. By controlling operating states of the controllable switches Q1, Q2, Q3, Q4, the power factor correction circuit may be used for rectification or inversion.

As an example, the DC voltage conversion circuit 214 may be a bidirectional DC voltage converter shown in Fig. 3, wherein the bidirectional DC voltage converter comprises a first AC-DC conversion module, a transformer module and a second AC-DC conversion module. The first AC-DC conversion module comprises a bridge circuit formed of controllable switches Q5, Q6, Q7, Q8 and capacitors C5, C6, C7, C8. By controlling operating states of the controllable switches Q5, Q6, Q7, Q8, the first AC-DC conversion module may be used for rectification or inversion. The transformer module comprises a transformer formed of inductors L1, L2, L3, and the transformer module may be used for stepping up or stepping down voltage by means of changing the number of turns of the windings of the inductors L1, L2, L3. The second AC-DC conversion module comprises a bridge circuit formed of controllable switches Q11, Q12, Q13, Q14 and capacitors C11, C12, C13, C14. By controlling operating states of the controllable switches Q11, Q12, Q13, Q14, the second AC-DC conversion module may be used for rectification or inversion.

In a scenario in which the battery V2 is charged from the external power source V1 via the first capacitor C1, the first AC-DC conversion module is used for converting voltage of the first voltage conversion side of the DC voltage conversion circuit into second AC power, and the transformer module is used for converting the second AC power into third AC power, and the second AC-DC conversion module is used for converting the third AC power into voltage of the second voltage conversion side of the DC voltage conversion circuit.

In a scenario in which the first capacitor C1 is precharged from the battery V2, the second AC-DC conversion module is used for converting voltage of the second voltage conversion side of the DC voltage conversion circuit into fourth AC power, and the transformer module is used for converting the fourth AC power into fifth AC power, and the first AC-DC conversion module is used for converting the fifth AC power into voltage of the first voltage conversion side of the DC voltage conversion circuit.

It should be understood that Fig. 3 does not show specific constituent parts of the voltage measuring module and the charging control module, and no restrictions are imposed in this respect. The charging system shown in Fig. 3 is also a charging system that achieves a soft start, by charging the first capacitor C1 using a bidirectional charging characteristic of the bidirectional charging module 210-2 in the precharging mode.

Compared to the charging system shown in Fig. 1A, the soft start of the charging system shown in Fig. 3 is more reliable and costs less.

It should be understood that, although not shown, the voltage measuring module 210-4 may further measure voltages at other elements besides the voltage of the external power source and the voltage of the first capacitor; and the charging control module 210-6 may further control other switches besides the control switch S1.

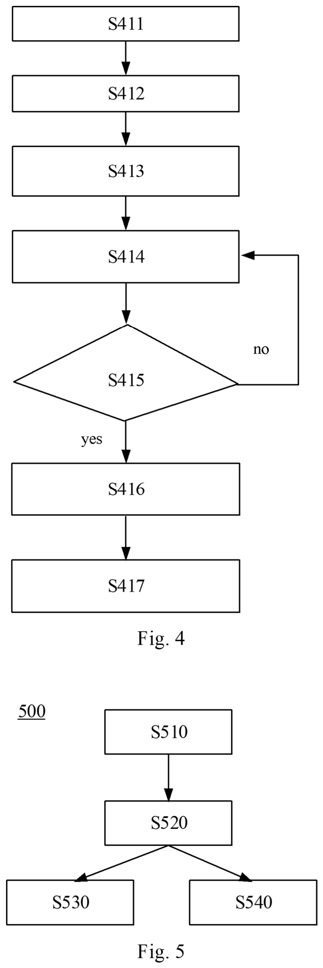

Fig. 4 is a schematic drawing of a charging process according to embodiments of the present disclosure.

According to embodiments of the present disclosure, the charging process shown in Fig. 4 may be used for the charging system described above.

As shown in Fig. 4, in a process of charging an energy storage module from an external power source, a charging system first receives a charging request (step S411). According to embodiments of the present disclosure, in a scenario in which the external power source is connected to a charging interface of the charging system by means of a voltage input terminal inside the charging interface, the charging system may receive the charging request by receiving an instruction from a user or another device; or the charging system may further automatically confirm reception of the charging request in response to the charging interface of the charging system connecting to the external power source.

Next, in step S412, in response to the charging request to start charging, the charging system may enter a precharging mode. In the precharging mode, the charging system precharges the first capacitor from the energy storage module (step S413).

During precharging, a voltage measuring module of the charging system measures a voltage Vmain of the external power source and a voltage Vinv of the first capacitor in real time (step S414). When the voltage Vmain and the voltage Vinv are measured, a charging control module of the charging system further judges whether a voltage difference between Vmain and Vinv is less than a first threshold (step S415). If the voltage difference between Vmain and Vinv is less than the first threshold, the charging control module of the charging system controls a charging control switch to close (step S416), and further controls a bidirectional charging module of the charging system to charge the energy storage module from the external power source (step S417). If the voltage difference between Vmain and Vinv is greater than or equal to the first threshold, the charging system still operates in the precharging mode, and continues to measure the voltage Vmain and the voltage Vinv.

The process shown in Fig. 4 fully utilizes a characteristic of the bidirectional charging module to achieve a charging soft start (i.e. in the precharging mode and the charging mode, charging directions being different), and does not require a specially designed soft start unit (e.g. adding a current limiting resistor, etc.). Charging by means of the process shown in Fig. 4 can avoid the cost of an additional soft start unit, and prevents long-term exposure of a soft start unit to voltage and current surges, easily causing faults, thus affecting the overall safety and reliability of the charging system.

Fig. 5 is a schematic flowchart of a method 500 for charging an energy storage module from an external power source according to embodiments of the present disclosure.

In step S510, in a scenario in which the external power source is connected to a charging interface of a charging system by means of a voltage input terminal inside the charging interface, a voltage of the external power source and a voltage of a first capacitor in the charging interface are measured, wherein a charging control switch for controlling the external power source to charge the first capacitor is connected between the voltage input terminal and the first capacitor.

According to embodiments of the present disclosure, the method 500 of the present disclosure may be used in scenarios such as charging a means of transport, charging an electronic device and charging an electromechanical device. For example, the method 500 may be used for charging an onboard power source. In a scenario in which the charging system is used for charging an onboard power source, the bidirectional charging module may be a bidirectional onboard charger (OBC).

It should be understood that the charging system may have the structure and composition of the charging system shown in any one of Fig. 1B, Fig. 2 and Fig. 3.

In step S520, it is judged whether a voltage difference between the voltage of the external power source and the voltage of the first capacitor is greater than a first threshold.

According to embodiments of the present disclosure, the judgement process shown in step S520 may not only be implemented by the voltage measuring module in the charging system, but also may be implemented by the charging control module in the charging system, and no restrictions are imposed in this respect.

It must be explained that voltage in the present disclosure comprises two pieces of information: voltage magnitude and voltage phase. When calculating the voltage difference between the voltage of the external power source and the voltage of the first capacitor, voltage phase information must be considered as well as voltage magnitude information. The first threshold may be determined according to the performance of elements in the charging system and experiments.

In a scenario in which the voltage difference between the voltage of the external power source and the voltage of the first capacitor is greater than the first threshold, in step S530, the charging control switch is controlled to open, so that the bidirectional charging module precharges the first capacitor from the energy storage module (i.e. a precharging mode).

In a scenario in which the voltage difference between the voltage of the external power source and the voltage of the first capacitor is less than the first threshold, in step S540, the charging control switch is controlled to close, so that the bidirectional charging module charges the energy storage module from the external power source (i.e. a charging mode).

Although the ultimate objective of the method 500 is to charge the energy storage module from the external power source, the charging system may precharge the first capacitor from the energy storage module in the precharging mode, and charge the energy storage module from the external power source via the first capacitor in the charging mode to achieve a soft start of the charging system.

According to embodiments of the present disclosure, the bidirectional charging module may comprise a capacitor. The method 500 may first precharge the capacitor in the bidirectional charging module in a precharging mode, such that when the energy storage module is charged from the external power source via the first capacitor in a charging mode, the voltage across two ends of the capacitor in the bidirectional charging module does not change suddenly, thereby preventing a surge current from damaging circuit elements in the charging system.

Optionally, the capacitor in the bidirectional charging module may be a large-capacity capacitor. In the precharging mode, in a scenario in which a voltage value across two ends of a second capacitor is large (for example, greater than the voltage of the second capacitor when charging normally), the voltage may be reduced by releasing energy to the first capacitor, and a specific current limiting resistor is not needed to bear the energy released by the second capacitor; charging is more reliable, and costs are saved on. In the charging mode, when the energy storage module is charged from the external power source via the first capacitor, a voltage difference between the voltage of the external power source and the voltage of the first capacitor is already controlled to be within a small range, and circuit elements in the charging system are not exposed to voltage and current surges.

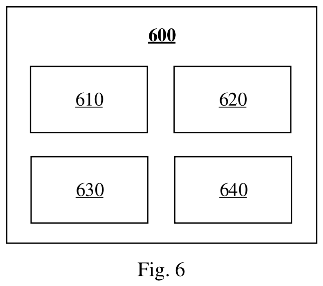

Fig. 6 is a schematic drawing of the composition of a charging system 600 for charging an energy storage module from an external power source according to embodiments of the present disclosure.

According to embodiments of the present disclosure, the charging system 600 may enter a precharging mode in response to the external power source connecting to the charging interface by means of the voltage input terminal.

According to embodiments of the present disclosure, the charging system 600 comprises a charging interface 610, a voltage measuring module 620, a bidirectional charging module 630 and a charging control module 640.

The charging interface 610 may comprise a voltage input terminal, a charging control switch and a first capacitor, wherein the external power source connects to the charging interface by means of the voltage input terminal, and the charging control switch is connected between the voltage input terminal and the first capacitor to control charging of the first capacitor by the external power source.

According to embodiments of the present disclosure, the charging control switch may be realized on the basis of a relay, wherein a contact of the relay is open in a scenario in which said voltage difference is greater than the first threshold, and the contact of the relay is closed in a scenario in which said voltage difference is less than the first threshold. Optionally, the charging control switch may further close or open switches on the basis of switch contacts of various controllers. In addition, the charging control switch may further close or open a switch on the basis of a switch instruction of a control computer.

It must be explained that the number of the first capacitors may be one or more than one, and no restrictions are imposed in this respect.

The voltage measuring module 620 may be used for measuring a voltage of the external power source and a voltage of the first capacitor.

The bidirectional charging module 630 may be used for precharging the first capacitor from the energy storage module in a precharging mode, and for charging the energy storage module from the external power source via the first capacitor in a charging mode.

According to embodiments of the present disclosure, the bidirectional charging module 630 may comprise a capacitor, and this capacitor may be used for voltage stabilization and filtering. In the precharging mode, a voltage value across two ends of the capacitor in the bidirectional charging module 630 may be large, and by charging the first capacitor, the voltage across two ends of the capacitor in the bidirectional charging module 630 may be reduced.

As an example, the bidirectional charging module may comprise: an AC-DC conversion circuit, a second capacitor, a DC voltage conversion circuit and a third capacitor, wherein the first capacitor is connected in parallel to an AC side of the AC-DC conversion circuit, and the second capacitor is connected in parallel to a DC side of the AC-DC conversion circuit; and a first voltage conversion side of the DC voltage conversion circuit is connected in parallel to the second capacitor, and a second voltage conversion side of the DC voltage conversion circuit is connected in parallel to the third capacitor, and the third capacitor is connected in parallel to the energy storage module.

It should be understood that the DC voltage conversion circuit may also operate in two directions, to raise or lower voltage according to requirements. The AC-DC conversion circuit may operate in two directions, to act as a rectifier or an inverter according to requirements. For example, in a scenario in which the first capacitor is precharged from the energy storage module, the AC-DC conversion circuit is used for inverting voltage of the first voltage conversion side of the DC voltage conversion circuit into first AC power, to precharge the first capacitor using the first AC power; and in a scenario in which the energy storage module is charged from the external power source, the AC-DC conversion circuit is used for rectifying voltage across two ends of the first capacitor into first DC power, for the first DC power to act as input for the first voltage conversion side of the DC voltage conversion circuit.

According to embodiments of the present disclosure, the AC-DC conversion circuit may comprise at least one of a passive power factor correction circuit and an active power factor correction circuit; the DC voltage conversion circuit comprises at least one of a resonant bidirectional DC voltage conversion circuit (e.g. a CLLC resonant converter) and a dual active bridge (DAB) DC voltage conversion circuit. The AC-DC conversion circuit or the power factor correction circuit may realize two different functions: AC-DC voltage conversion and power factor adjustment. Processing of the AC-DC conversion circuit or power factor correction circuit enables the magnitudes and phases of the voltage of the first capacitor and the voltage of the external power source to be similar after precharging.

The charging control module 640 may be used for controlling the charging control switch to open and controlling the bidirectional charging module to precharge the first capacitor from the energy storage module, in a scenario in which a voltage difference between the voltage of the external power source and the voltage of the first capacitor is greater than a first threshold; and used for controlling the charging control switch to close and controlling the bidirectional charging module to charge the energy storage module from the external power source, in a scenario in which said voltage difference is less than the first threshold.

According to embodiments of the present disclosure, the charging control module 640 may be realized on the basis of an integrated circuit, a controller, a control computer, etc., and no restrictions are imposed in this respect.

According to embodiments of the present disclosure, the charging system 600 may be used for an electromechanical device, an electronic device, a vehicle, an integrated circuit, etc., to achieve a charging soft start.

For example, in a scenario in which the charging system 600 is used for a vehicle, the bidirectional charging module 630 may be an onboard charger (OBC) that is able to operate in two directions, and the energy storage module may be an onboard power source.

By precharging the first capacitor from the energy storage module in the precharging mode, again in a scenario in which the voltage of the external power source and the voltage of the first capacitor are similar, the energy storage module is charged from the external power source via the first capacitor in the charging mode, and the charging system 600 is able to effectively avoid sudden changes in voltage and current at components in the charging system during charging affecting the components, affecting the performance and service life of the components, and thus improving the reliability of the charging system.

It must be explained that the charging system 600 for charging an energy storage module from an external power source shown in Fig. 6 may be used for implementing the method 500 for charging an energy storage module from an external power source shown in Fig. 5, and the charging system 600 may have the structure and/or composition shown in Fig. 1B, Fig. 2 or Fig. 3.

According to embodiments of the present disclosure, the charging system 600 may further be used in an electric drive system. For example, the electric drive system may be an electric drive system of an automobile; this automobile may charge by means of the method 500, and the automobile is provided with motive power by means of the electric drive system.

The present disclosure further provides a vehicle, comprising the charging system and/or the electric drive system as described above. The vehicle may be an electrified vehicle, such as a battery electric vehicle (BEV), a hybrid electric vehicle (HEV), a plug-in hybrid electric vehicle (PHEV), a range extended EV or a fuel cell electric vehicle (FCEV). The vehicle may also be a hydrogen-powered vehicle. This vehicle is able to use the method 500 to perform onboard battery charging, to achieve a charging soft start.

The present disclosure uses specific words to describe embodiments of the present disclosure. For example, "first/second embodiment", "an embodiment" and/or "some embodiments" mean a certain feature, structure or characteristic related to at least one embodiment of the present disclosure. Therefore, it should be stressed and noted that "an embodiment", "one embodiment", or "an alternative embodiment" mentioned two or more times in different places herein does not necessarily refer to the same embodiment. In addition, certain features, structures or characteristics in one or more embodiments of the present disclosure may be combined appropriately.

It must be explained that, in the present Description, the terms "comprise", "include" or any other variants are intended to cover non-exclusive inclusion, so that a process, method, item or device comprising a series of key elements does not only comprise these key elements, but also comprises other key elements that are not explicitly listed, or further comprises key elements inherent to such a process, method, item or device. Without more restrictions, a key element defined by the phrase "comprising one..." does not eliminate another identical key element being further present in a process, method, item or device comprising the key element.

In addition, a series of processes described above does not only comprise processes executed chronologically in the order described herein, but also comprises processes executed in parallel or separately, and not chronologically.

By means of the description of the above embodiments, a person skilled in the art will understand that the present disclosure can be realized through software together with the required hardware platform, and of course, can also be completely realized through hardware. Based on such an understanding, all or some of the technical solutions of the present disclosure that contribute to the background art may be embodied in the form of a software product; this computer software product may be stored in a storage medium, such as ROM (read-only memory)/RAM (random access memory), a magnetic disc, an optical disc, etc., and comprises multiple instructions for causing a computer device (which may be a personal computer, a server or a network device, etc.) to implement the embodiments of the present disclosure or the signal switching circuits of certain portions of the embodiments.

Unless otherwise defined, all of the terms (including technical and scientific terms) used herein have the same meanings as commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present disclosure, and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be included in the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. A charging system for charging an energy storage module from an external power source, comprising:
a charging interface, comprising a voltage input terminal, a charging control switch and a first capacitor, wherein the external power source connects to the charging interface by means of the voltage input terminal, and the charging control switch is connected between the voltage input terminal and the first capacitor to control charging of the first capacitor by the external power source;
a voltage measuring module, used for measuring a voltage of the external power source and a voltage of the first capacitor;
a bidirectional charging module, used for precharging the first capacitor from the energy storage module in a precharging mode, and for charging the energy storage module from the external power source via the first capacitor in a charging mode; and
a charging control module, used for controlling the charging control switch to open and controlling the bidirectional charging module to precharge the first capacitor from the energy storage module, in a scenario in which a voltage difference between the voltage of the external power source and the voltage of the first capacitor is greater than a first threshold; and used for controlling the charging control switch to close and controlling the bidirectional charging module to charge the energy storage module from the external power source, in a scenario in which the voltage difference is less than the first threshold.

2. The charging system according to claim 1, wherein the bidirectional charging module comprises: an AC-DC conversion circuit, a second capacitor, a DC voltage conversion circuit and a third capacitor, wherein
the first capacitor is connected in parallel to an AC side of the AC-DC conversion circuit, and the second capacitor is connected in parallel to a DC side of the AC-DC conversion circuit; and
a first voltage conversion side of the DC voltage conversion circuit is connected in parallel to the second capacitor, and a second voltage conversion side of the DC voltage conversion circuit is connected in parallel to the third capacitor, and the third capacitor is connected in parallel to the energy storage module.

3. The charging system according to claim 2, wherein
in a scenario in which the first capacitor is precharged from the energy storage module, the AC-DC conversion circuit is used for inverting voltage of the first voltage conversion side of the DC voltage conversion circuit into first AC power, to precharge the first capacitor using the first AC power; and
in a scenario in which the energy storage module is charged from the external power source, the AC-DC conversion circuit is used for rectifying voltage across two ends of the first capacitor into first DC power, for the first DC power to act as input for the first voltage conversion side of the DC voltage conversion circuit.

4. The charging system according to claim 2, wherein
the AC-DC conversion circuit comprises at least one of a passive power factor correction circuit and an active power factor correction circuit;
the DC voltage conversion circuit comprises at least one of a resonant bidirectional DC voltage conversion circuit and a dual active bridge DC voltage conversion circuit.

5. The charging system according to claim 2, wherein the DC voltage conversion circuit comprises a first AC-DC conversion module, a transformer module and a second AC-DC conversion module,
wherein in a scenario in which the energy storage module is charged from the external power source, the first AC-DC conversion module is used for converting voltage of the first voltage conversion side of the DC voltage conversion circuit into second AC power, the transformer module is used for converting the second AC power into third AC power, and the second AC-DC conversion module is used for converting the third AC power into voltage of the second voltage conversion side of the DC voltage conversion circuit; and
in a scenario in which the first capacitor is precharged from the energy storage module, the second AC-DC conversion module is used for converting voltage of the second voltage conversion side of the DC voltage conversion circuit into fourth AC power, the transformer module is used for converting the fourth AC power into fifth AC power, and the first AC-DC conversion module is used for converting the fifth AC power into voltage of the first voltage conversion side of the DC voltage conversion circuit.

6. The charging system according to claim 1, wherein the charging control switch is realized on the basis of a relay,
wherein a contact of the relay is open in a scenario in which the voltage difference is greater than the first threshold, and the contact of the relay is closed in a scenario in which the voltage difference is less than the first threshold.

7. The charging system according to claim 1, wherein
the bidirectional charging module is an on-board charger, and the energy storage module is an on-board power source.

8. A charging method for charging an energy storage module from an external power source, comprising:
in a scenario in which the external power source is connected to a charging interface of a charging system by means of a voltage input terminal inside the charging interface, measuring a voltage of the external power source and a voltage of a first capacitor in the charging interface, wherein a charging control switch for controlling the external power source to charge the first capacitor is connected between the voltage input terminal and the first capacitor;
judging whether a voltage difference between the voltage of the external power source and the voltage of the first capacitor is greater than a first threshold; and
controlling the charging control switch to open, so that a bidirectional charging module precharges the first capacitor from the energy storage module, in a scenario in which the voltage difference between the voltage of the external power source and the voltage of the first capacitor is greater than the first threshold; and controlling the charging control switch to close, so that the bidirectional charging module charges the energy storage module from the external power source, in a scenario in which the voltage difference is less than the first threshold.

9. The charging method according to claim 8, wherein the bidirectional charging module comprises: an AC-DC conversion circuit, a second capacitor, a DC voltage conversion circuit and a third capacitor, wherein
the first capacitor is connected in parallel to an AC side of the AC-DC conversion circuit, and the second capacitor is connected in parallel to a DC side of the AC-DC conversion circuit; and
a first voltage conversion side of the DC voltage conversion circuit is connected in parallel to the second capacitor, a second voltage conversion side of the DC voltage conversion circuit is connected in parallel to the third capacitor, and the third capacitor is connected in parallel to the energy storage module.

10. An electric drive system, comprising the charging system according to any one of claims 1 to 7.

11. A vehicle, comprising the charging system according to any one of claims 1 to 7 and/or the electric drive system according to claim 10.
